# FASCICULE DE BREVET EUROPEEN

(11) **EP 1 991 834 B1**
(45) Date de publication et mention de la délivrance du brevet: **02.08.2017**
(21) Numéro de dépôt: 07731002.7
(22) Date de dépôt: 19.02.2007
(51) Int. Cl.: G01C 23/00, G01D 7/00

(54) **PROCEDE ET DISPOSITIF D AJUSTEMENT AUTOMATIQUE D UNE IMAGE D UN ECRAN DE NAVIGATION D AERONEF**
VERFAHREN UND VORRICHTUNG ZUR AUTOMATISCHEN EINSTELLUNG EINES BILDES EINES FLUGZEUGNAVIGATIONSBILDSCHIRMS
METHOD AND DEVICE FOR AUTOMATICALLY ADJUSTING AN IMAGE OF AN AIRCRAFT NAVIGATION SCREEN

(30) Priorité: 27.02.2006 FR 0601676
(43) Date de publication de la demande: 19.11.2008
(73) Titulaire: AIRBUS OPERATIONS (SAS), 31060 Toulouse (FR)
(72) Inventeur: DELERIS, Yannick, F-31330 Grenade (FR); MAILY, Christophe, F-31200 Toulouse (FR)
(74) Mandataire: Gevers & Orès
(86) Numéro de dépôt international: PCT/FR2007/000291
(87) Numéro de publication internationale: WO 2007/096508

(56) Documents cités:
- WO-A-02/21229
- WO-A-2004/037643
- US-A1- 2002 080 145
- US-A1- 2004 059 473
- US-A1- 2005 066 275

## Description

La présente invention concerne un procédé et un dispositif d'ajustement automatique d'une image d'un écran de navigation d'un aéronef.

On sait qu'un aéronef, en particulier un avion de transport, est généralement équipé de différents systèmes destinés à surveiller l'environnement de l'aéronef (trafic aérien, terrain survolé, ...) de manière à pouvoir détecter des événements susceptibles d'être dangereux pour cet aéronef, tels qu'un risque de collision avec un autre aéronef ou avec le terrain survolé par exemple. Lorsqu'un tel système émet une alerte, le pilote de l'aéronef surveille généralement son écran de navigation, par exemple de type ND ("Navigation Display" en anglais), pour avoir un aperçu de la situation réelle de son aéronef par rapport à son environnement, notamment dans le cas d'une alerte relative à un risque de collision avec un autre aéronef. Or, il peut arriver que la configuration d'affichage existant à cet instant sur l'écran de navigation ne puisse fournir au pilote les informations recherchées. Aussi, pour avoir une bonne vision de l'état réel de l'environnement, il est fréquent que le pilote doive, dans une telle situation d'alerte souvent stressante, modifier le mode d'affichage et/ou l'échelle de l'écran de navigation pour obtenir l'image appropriée à la gestion de la situation courante. Un tel réglage manuel peut lui faire perdre du temps, en particulier dans le cas où plusieurs manipulations sur chacun des deux boutons de commande associés sont nécessaires. Une telle solution n'est donc pas satisfaisante.

Par ailleurs, on connaît :
- par le document US-2004/059473, un système d'affichage d'un aéronef destiné à afficher une carte du terrain survolé. Ce système d'affichage qui permet d'avertir le pilote de l'aéronef d'un risque de collision avec le terrain survolé ou avec un aéronef environnant, prévoit de mettre en évidence des caractéristiques du terrain en agrandissant la composante verticale relative à ces caractéristiques ou en utilisant un jeu de couleurs ;
- par le document WO-2004/037643, une planche de bord d'aéronef, qui comprend des instruments de secours destinés à afficher des données de navigation essentielles dans le cas où des systèmes d'affichage principaux de l'aéronef tombent en panne ;
- par le document US-2005/066275, un procédé et un appareil pour afficher différentes catégories de données, en particulier des données de vol d'un aéronef. Ce document antérieur prévoit de réaliser l'affichage avec des luminosités différentes ;
- par le document US-2002/080145, un appareil pour afficher un terrain et des alertes de terrain sur un aéronef à voilure tournante ; et
- par le document WO-02/21229, un dispositif d'anticollision terrain pour aéronef. Ce dispositif comporte, notamment, un module de visualisation pour afficher un terrain et une signalisation particulière d'alertes éventuelles.

La présente invention a pour objet de remédier aux inconvénients précités. Elle concerne un procédé permettant d'ajuster automatiquement une image d'un écran de navigation d'un aéronef, ledit écran de navigation étant susceptible d'afficher une image selon un mode d'affichage faisant partie d'une pluralité de modes d'affichage différents et avec une échelle faisant partie d'une pluralité d'échelles différentes.

A cet effet, selon l'invention, ledit procédé est remarquable en ce que l'on réalise, de façon automatique, les opérations successives suivantes :
a) on effectue automatiquement une surveillance de l'environnement de l'aéronef de manière à pouvoir détecter un événement susceptible d'être dangereux pour l'aéronef ; et
b) si un tel événement est détecté à l'étape a) :
   b1) on analyse l'affichage mis en oeuvre sur l'écran de navigation de manière à pouvoir détecter la nécessité d'un changement d'affichage correspondant à la nécessité d'un changement de mode d'affichage et à la nécessité d'un changement d'échelle ; et
   b2) si la nécessité d'un changement d'affichage est détectée à l'étape b1) : α)on détermine une nouvelle configuration d'affichage qui est adaptée à l'environnement courant de l'aéronef et qui permet de présenter sur l'écran de navigation l'événement détecté à l'étape a), une configuration d'affichage représentant un mode d'affichage et une échelle ; et
   β) on réalise automatiquement un changement d'affichage de l'écran de navigation, en lui appliquant la nouvelle configuration d'affichage déterminée à l'étape α),
   procédé selon lequel, de plus, un pilote de l'aéronef peut demander un changement d'affichage de l'écran de navigation afin d'obtenir une nouvelle configuration d'affichage et, lorsque deux changements différents sont demandés simultanément respectivement par le pilote et par l'opération α), on sélectionne automatiquement, conformément à une logique de priorité prédéterminée, l'une des deux nouvelles configurations d'affichage demandées, et on applique automatiquement à l'écran de navigation la nouvelle configuration d'affichage ainsi sélectionnée,
   procédé selon lequel dans le cas d'une alerte de collision émise à l'étape a), relative à un aéronef intrus :
      - on vérifie, en tenant compte de la position angulaire de l'aéronef intrus par rapport au cap magnétique dudit aéronef, si cet aéronef intrus est contenu dans l'image qui est affichée sur l'écran de navigation et qui est conforme au mode d'affichage courant, et si cela n'est pas le cas, on détermine un mode d'affichage, pour lequel la position angulaire de l'aéronef intrus peut être affichée sur l'écran de navigation ; et
      - on vérifie, en tenant compte de l'échelle courante de l'écran de navigation, et de la distance entre ledit aéronef et l'aéronef intrus, si l'aéronef intrus se trouve sur l'image affichée par l'écran de navigation, et si cela n'est pas le cas, on sélectionne une échelle permettant de représenter cet aéronef intrus sur l'image affichée.

Ainsi, grâce à l'invention, lors de la détection d'un événement (tel que précisé ci-dessous) qui est susceptible d'être dangereux pour l'aéronef, on réalise, si nécessaire, une modification automatique de la configuration d'affichage, c'est-à-dire du mode d'affichage et/ou de l'échelle, de manière à proposer directement au pilote de l'aéronef la configuration d'affichage la plus adaptée à sa situation, en particulier celle qui permet de présenter au mieux sur l'écran de navigation l'événement détecté. Cette reconfiguration automatique déleste le pilote d'une tâche qui a été faite manuellement jusqu'à présent, ce qui permet notamment de réduire fortement la charge de travail du pilote dans une telle situation d'alerte qui est le plus souvent très stressante.

Dans le cadre de la présente invention, différentes logiques de priorité sont possibles (lorsque deux changements différents sont demandés simultanément), notamment en fonction des configurations d'affichage demandées et/ou en fonction de la phase de vol. Toutefois, dans un mode de réalisation préféré, la configuration d'affichage demandée par le pilote est prioritaire par rapport à une configuration d'affichage relative à une demande automatique. Ainsi, le pilote de l'aéronef reste maître de l'affichage réalisé sur l'écran de navigation, puisqu'une simple commande de sa part permet de surpasser toute commande automatique conforme à l'invention.

En outre, avantageusement, en cas de détection d'un événement dangereux à l'étape a), on réalise de plus les opérations suivantes :
- on analyse l'ensemble des informations présentées sur l'écran de navigation de manière à déterminer les informations qui ne sont pas indispensables à court terme pour le pilotage de l'aéronef ; et
- on désactive sur ledit écran de navigation l'affichage de toutes les informations non indispensables ainsi déterminées.

Ceci permet de simplifier la lecture de l'écran de navigation, et donc de réduire la charge de travail du pilote, dans une telle situation d'alerte à fort stress.

Avantageusement, à l'étape a), on réalise une surveillance d'au moins l'un des éléments suivants :
- le trafic aérien qui existe dans l'environnement aérien de l'aéronef ;
- le terrain survolé par l'aéronef ; et
- l'environnement aérodynamique de l'aéronef, et notamment l'apparition de turbulences.

La présente invention concerne également un dispositif d'ajustement automatique d'une image d'un écran de navigation d'un aéronef, en particulier d'un avion de transport, ledit écran de navigation étant susceptible d'afficher une image selon un mode d'affichage faisant partie d'une pluralité de modes d'affichage différents et avec une échelle faisant partie d'une pluralité d'échelles différentes.

Selon l'invention, ledit dispositif est remarquable en ce qu'il comporte :
- des moyens de surveillance pour effectuer une surveillance automatique de l'environnement de l'aéronef de manière à pouvoir détecter un événement susceptible d'être dangereux pour l'aéronef ;
- des premiers moyens pour analyser automatiquement l'affichage mis en oeuvre sur l'écran de navigation, si un tel événement est détecté par les moyens de surveillance, de manière à pouvoir détecter la nécessité d'un changement d'affichage, lesdits premiers moyens comprenant des moyens pour détecter la nécessité d'un changement de mode d'affichage et des moyens pour détecter la nécessité d'un changement d'échelle ;
- des deuxièmes moyens pour déterminer automatiquement, si la nécessité d'un changement d'affichage est détectée par les premiers moyens, une nouvelle configuration d'affichage qui est adaptée à l'environnement courant de l'aéronef et qui permet de présenter sur l'écran de navigation l'événement détecté, une configuration d'affichage représentant un mode d'affichage et une échelle ;
- des moyens d'affichage pour réaliser automatiquement un changement d'affichage de l'écran de navigation, en appliquant la nouvelle configuration d'affichage déterminée par lesdits deuxièmes moyens ;
- des moyens de commande actionnables, permettant à un pilote de l'aéronef de demander un changement d'affichage de l'écran de navigation ; et
- des moyens auxiliaires pour, lorsque deux changements différents sont demandés simultanément respectivement par le pilote et par lesdits deuxièmes moyens, sélectionner l'une des nouvelles configurations d'affichage demandées, conformément à une logique de priorité prédéterminée, la nouvelle configuration d'affichage sélectionnée par lesdits moyens auxiliaires étant appliquée automatiquement à l'écran de navigation,
lesdits premiers et deuxième moyens étant intégrés dans une première et une seconde unités de traitement,
ladite première unité de traitement étant telle qu'elle vérifie, en tenant compte de la position angulaire d'un aéronef intrus détecté par rapport au cap magnétique de l'aéronef sur lequel est monté ledit dispositif, si cet aéronef intrus est contenu dans l'image qui est affichée sur l'écran de navigation et qui est conforme au mode d'affichage courant, et si cela n'est pas le cas, elle détermine un mode d'affichage, pour lequel la position angulaire de l'aéronef intrus peut être affichée sur l'écran de navigation,
et ladite seconde unité de traitement étant telle qu'elle vérifie, en tenant compte de l'échelle courante de l'écran de navigation, et de la distance entre l'aéronef équipé du dispositif et l'aéronef intrus, si l'aéronef intrus se trouve sur l'image affichée par l'écran de navigation, et si cela n'est pas le cas, elle sélectionne une échelle permettant de représenter cet aéronef intrus sur l'image affichée.

Dans un mode de réalisation particulier, ledit dispositif comporte de plus :
- des troisièmes moyens pour analyser l'ensemble des informations présentées sur l'écran de navigation, si un événement dangereux est détecté par les moyens de surveillance, de manière à déterminer les informations qui ne sont pas indispensables à court terme pour le pilotage de l'aéronef ; et
- des quatrièmes moyens pour désactiver sur ledit écran de navigation l'affichage de toutes les informations non indispensables telles que déterminées par lesdits troisièmes moyens.

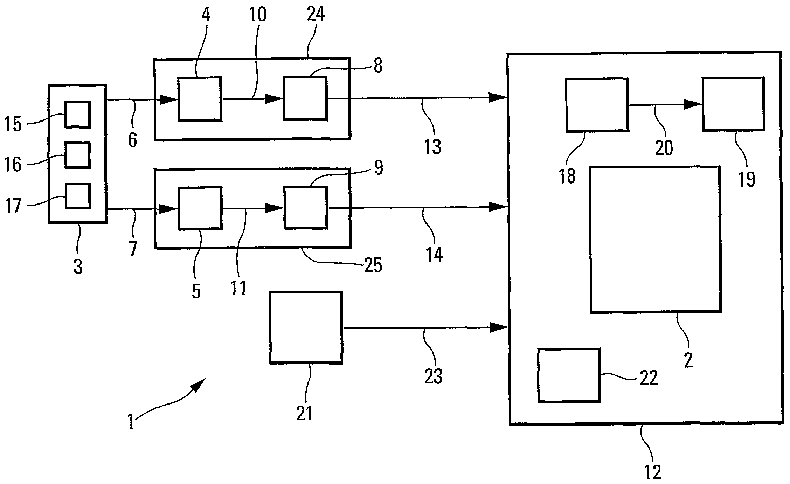

L'unique figure du dessin annexé fera bien comprendre comment l'invention peut être réalisée. Cette figure unique est le schéma synoptique d'un dispositif conforme à l'invention.

Le dispositif 1 conforme à l'invention et représenté schématiquement sur la figure est destiné à ajuster automatiquement une image d'un écran de navigation 2 d'un aéronef, en particulier d'un avion de transport.

On sait qu'un écran de navigation 2, par exemple de type ND ("Navigation Display" en anglais), présente une représentation graphique du plan de vol de l'aéronef et la situation de cet aéronef sur ce plan de vol (en deux dimensions). Un tel écran de navigation 2 présente généralement les éléments suivants :
- un symbole illustrant la position de l'aéronef ;
- un tracé montrant la trajectoire de vol théorique de l'aéronef dans le plan de vol horizontal ;
- une graduation en écarts angulaires ;
- une graduation en distance ; et
- éventuellement un ou plusieurs tracés auxiliaires illustrant par exemple une image radar et/ou une image du terrain survolé.

De façon usuelle, ledit écran de navigation 2 est susceptible d'afficher une image selon un mode d'affichage particulier et selon une échelle particulière. Ce mode d'affichage particulier et cette échelle particulière font partie, respectivement, d'une pluralité de modes d'affichage différents et d'une pluralité d'échelles différentes, comme précisé ci-dessous.

Selon l'invention, ledit dispositif 1 comporte :
- des moyens de surveillance 3 précisés ci-dessous, pour effectuer une surveillance automatique de l'environnement de l'aéronef de manière à pouvoir détecter tout événement susceptible d'être dangereux pour ledit
- un tracé montrant la trajectoire de vol théorique de l'aéronef dans le plan de vol horizontal ;
- une graduation en écarts angulaires ;
- une graduation en distance ; et
- éventuellement un ou plusieurs tracés auxiliaires illustrant par exemple une image radar et/ou une image du terrain survolé.

De façon usuelle, ledit écran de navigation 2 est susceptible d'afficher une image selon un mode d'affichage particulier et selon une échelle particulière. Ce mode d'affichage particulier et cette échelle particulière font partie, respectivement, d'une pluralité de modes d'affichage différents et d'une pluralité d'échelles différentes, comme précisé ci-dessous.

Selon l'invention, ledit dispositif 1 comporte :
- des moyens de surveillance 3 précisés ci-dessous, pour effectuer une surveillance automatique de l'environnement de l'aéronef de manière à pouvoir détecter tout événement susceptible d'être dangereux pour ledit aéronef, tel qu'un risque de collision avec le terrain survolé ou avec un autre aéronef par exemple ;
- des moyens 4 et 5 pour analyser automatiquement l'affichage mis en oeuvre sur l'écran de navigation 2, lorsqu'un événement dangereux est détecté par les moyens de surveillance 3, auxquels ils sont reliés respectivement par l'intermédiaire de liaisons 6 et 7. Ces moyens 4 et 5 sont formés de manière à pouvoir détecter la nécessité d'un changement d'affichage correspondant, respectivement, à un changement de mode d'affichage (en ce qui concerne lesdits moyens 4) et à un changement d'échelle (en ce qui concerne les moyens 5) ;
- des moyens 8 et 9 qui sont reliés, respectivement par l'intermédiaire de liaisons 10 et 11, auxdits moyens 4 et 5 et qui sont formés de manière à déterminer automatiquement une nouvelle configuration d'affichage, lorsque la nécessité d'un changement d'affichage est détectée par les moyens 4 et 5. Plus précisément, lorsque les moyens 4 détectent la nécessité d'un changement de mode d'affichage, les moyens 8 déterminent un nouveau mode d'affichage qui est adapté à l'environnement courant de l'aéronef et qui permet de présenter sur l'écran de navigation 2 l'événement détecté. De plus, lorsque les moyens 5 détectent la nécessité d'un changement d'échelle, les moyens 9 déterminent automatiquement une nouvelle échelle qui est également adapté à l'environnement courant de l'aéronef et qui permet également de présenter sur l'écran de navigation 2 l'événement détecté ; et
- des moyens d'affichage 12 qui sont reliés, respectivement par l'intermédiaire de liaisons 13 et 14, auxdits moyens 8 et 9 et qui sont formés de manière à réaliser automatiquement un changement d'affichage de l'écran de navigation 2. Pour ce faire, lesdits moyens d'affichage 12 appliquent le nouveau mode d'affichage reçu desdits moyens 8 et/ou la nouvelle échelle reçue desdits moyens 9 de manière à obtenir la nouvelle configuration d'affichage.

Ainsi, lors de la détection d'un événement (tel que précisé ci-dessous) qui est susceptible d'être dangereux pour l'aéronef, le dispositif 1 réalise, si nécessaire, une modification automatique de la configuration d'affichage (c'est-à-dire du mode d'affichage uniquement, ou de l'échelle uniquement, ou bien à la fois du mode d'affichage et de l'échelle) de l'écran de navigation 2, de manière à proposer directement au pilote de l'aéronef la configuration d'affichage la plus adaptée à sa situation, en particulier celle qui permet de présenter au mieux l'événement détecté sur l'écran de navigation 2. Cette reconfiguration automatique déleste le pilote d'une tâche qui est réalisée usuellement de façon manuelle, ce qui permet notamment de réduire la charge de travail du pilote dans une telle situation d'alerte qui est le plus souvent très stressante.

Dans un mode de réalisation préféré, lesdits moyens de surveillance 3 comportent :
- un système 15 de détection d'un risque de collision de l'aéronef avec le terrain survolé ; et/ou
- un système d'anticollision 16 ; et/ou
- un système 17 de surveillance de l'environnement aérodynamique de l'aéronef, permettant notamment de détecter des cisaillements de vent.

Ledit système 15 a pour objet de détecter tout risque de collision de l'aéronef sur lequel il est monté, avec le terrain environnant, et d'alerter l'équipage de cet aéronef lorsqu'un tel risque est détecté. Concernant ce système 15, il peut s'agir notamment d'un système de type TAWS ("Terrain Awareness and Warning System" en anglais, c'est-à-dire "système d'alerte et de prise de conscience du terrain" en français), notamment de type EGPWS ("Enhanced Ground Proximity Warning System" en anglais, c'est-à-dire "système amélioré d'alerte de proximité du sol" en français) ou de type GCAS ("Ground Collision Avoidance System" en anglais, c'est-à-dire "système d'évitement de collision avec le sol" en français). Lorsqu'un tel système 15 émet un signal d'alerte, il revient en général au pilote de tout mettre en oeuvre, en particulier en pilotant manuellement l'aéronef, pour éviter une collision avec le terrain.

En outre, le système d'anticollision 16, en particulier de type TCAS ("Traffic alert and Collision Avoidance System" en anglais, c'est-à-dire système d'alerte de trafic et d'évitement de collision), permet de surveiller les trajectoires des aéronefs volant à proximité de l'aéronef considéré et de représenter leurs positions respectives sur un écran de visualisation, par exemple l'écran de navigation 2. Ce système d'anticollision 16 repose sur un échange d'informations par l'intermédiaire de transpondeurs. A l'aide de l'altitude et de la distance, échangées par exemple toutes les secondes, ledit système d'anticollision 16 calcule la trajectoire de tout aéronef intrus. Il estime alors le danger potentiel et calcule une manoeuvre appropriée pour l'éviter. Cette manoeuvre s'exécute généralement uniquement dans le plan vertical.

Par ailleurs, le système 17, par exemple de type PWS ("Predictive Windshear" en anglais, c'est-à-dire prédiction des cisaillements de vent), permet de détecter des évènements météorologiques turbulents à basse altitude, appelés cisaillements de vent. La détection de ces phénomènes se fait, par exemple, à l'aide d'un radar météo en bande X utilisant le principe de l'effet Doppler.

Comme indiqué précédemment, le dispositif 1 conforme à l'invention permet d'ajuster automatiquement la configuration d'affichage sur l'écran de navigation 2, lors de l'émission d'une alerte par au moins l'un desdits systèmes 15, 16 et 17. Cet ajustement de la configuration d'affichage se caractérise par une adaptation automatique de l'échelle (exprimée généralement en mille nautique) et/ou du mode d'affichage.

Concernant les modes d'affichage, on sait qu'un écran de navigation 2 comprend généralement au moins les modes suivants :
- un mode dit "Rose", pour lequel un symbole illustrant l'aéronef se trouve au centre de l'écran de navigation 2. Il est fixe et a le nez orienté vers le haut. Plusieurs cercles concentriques donnent une échelle de référence permettant de mesurer rapidement et visuellement les distances ;
- un mode dit "Arc", pour lequel le symbole illustrant l'aéronef se trouve au bas de l'écran de navigation 2, au centre de plusieurs arcs de cercle, dont l'écartement correspond au niveau de zoom sélectionné. La carte tourne et glisse en fonction des déplacements de l'aéronef, dont le symbole reste fixe, comme dans le mode "Rose" ; et
- un mode dit "Plan". Il s'agit d'une vue de dessus, orientée vers le Nord. L'aéronef se déplace sur cette carte, qui est fixe. Le mode "Plan" ressemble à celui du mode "Rose" (il est constitué de cercles), mais il est un peu plus dépouillé et désolidarisé du symbole représentant l'aéronef.

Par ailleurs, dans un mode de réalisation particulier, le dispositif 1 comporte de plus :
- des moyens 18 pour analyser l'ensemble des informations présentées sur l'écran de navigation 2, lorsqu'un événement dangereux est détecté par les moyens de surveillance 3, de manière à déterminer les informations qui ne sont pas indispensables à court terme pour le pilotage de l'aéronef ; et
- des moyens 19 qui sont reliés par l'intermédiaire d'une liaison 20 auxdits moyens 18 et qui sont formés de manière à désactiver dans cette situation, sur ledit écran de navigation 2, l'affichage de toutes les informations non indispensables déterminées par lesdits moyens 18.

Ce mode de réalisation particulier permet de simplifier la lecture de l'écran de navigation 2, et ainsi de réduire la charge de travail du pilote, dans une telle situation d'alerte à fort stress.

En outre, dans un mode de réalisation préféré, ledit dispositif 1 comporte de plus :
- des moyens de commande actionnables 21 permettant à un pilote de l'aéronef de demander un changement de mode d'affichage de l'écran de navigation 2. Ces moyens de commande 21 sont formés de manière à pouvoir être commandés de manière manuelle, par l'intermédiaire d'un bouton rotatif ou d'une touche actionnable ; et
- des moyens 22 de gestion des priorités, qui sont par exemple intégrés dans lesdits moyens d'affichage 12. Ces moyens 22 sont formés de manière à sélectionner l'une des nouvelles configurations d'affichage demandées, lorsque deux changements différents d'affichage sont demandés simultanément, respectivement, suite à l'actionnement des moyens de commande 21 par le pilote (via une liaison 23) et automatiquement par lesdits moyens 8 ou 9 (via la liaison 13 ou 14). Lesdits moyens 22 réalisent cette sélection conformément à une logique de priorité prédéterminée.

La nouvelle configuration d'affichage sélectionnée par ces moyens 22 est appliquée automatiquement à l'écran de navigation 2, par lesdits moyens d'affichage 12.

Dans le cadre de la présente invention, différentes logiques de priorité sont possibles, notamment en fonction des configurations d'affichage demandées et/ou en fonction de la phase de vol. Toutefois, dans un mode de réalisation préféré, une demande réalisée par le pilote est toujours prioritaire par rapport à toute demande automatique. Ainsi, le pilote de l'aéronef reste maître de l'affichage effectué sur l'écran de navigation 2, puisqu'une simple commande de sa part (à l'aide desdits moyens de commande 21) permet de surpasser toute commande automatique conforme à l'invention.

Selon l'invention :
- lesdits moyens 4 et 8 sont intégrés dans une unité de traitement 24 ; et
- lesdits moyens 5 et 9 sont intégrés dans une unité de traitement 25.

De plus, selon l'invention, dans le cas d'une alerte de collision émise par le système d'anticollision 16 :
- l'unité de traitement 24 vérifie, en tenant compte par exemple de la position angulaire de l'aéronef intrus détecté par rapport au cap magnétique de l'aéronef sur lequel est monté le dispositif 1, si cet aéronef intrus est contenu dans l'image qui est affichée sur l'écran de navigation 2 et qui est conforme au mode d'affichage courant. Si cela n'est pas le cas, l'unité de traitement 24 détermine un mode d'affichage, pour lequel la position angulaire de l'aéronef intrus peut être affichée sur l'écran de navigation 2 ; et
- l'unité de traitement 25 vérifie, en tenant compte de l'échelle courante de l'écran de navigation 2, et de la distance entre l'aéronef équipé du dispositif 1 et l'aéronef intrus, si l'aéronef intrus se trouve sur l'image affichée par l'écran de navigation 2. Si cela n'est pas le cas, l'unité de traitement 25 sélectionne une échelle permettant de représenter cet aéronef intrus sur l'image affichée.

Une telle sélection est réalisée par exemple de façon itérative, en faisant la vérification précitée pas à pas suivant les valeurs d'échelle possibles qui sont prises en compte successivement selon un ordre de valeur croissante.

## Revendications

1. Procédé d'ajustement automatique d'une image d'un écran de navigation (2) d'un aéronef, ledit écran de navigation (2) étant susceptible d'afficher une image selon l'un d'une pluralité de modes d'affichage différents et avec l'une d'une pluralité d'échelles différentes, procédé selon lequel on réalise, de façon automatique, les opérations successives suivantes :
a) on effectue automatiquement une surveillance de l'environnement de l'aéronef de manière à pouvoir détecter un événement susceptible d'être dangereux pour l'aéronef ; et
b) si un tel événement est détecté à l'étape a) :
b1) on analyse l'affichage mis en oeuvre sur l'écran de navigation (2) de manière à pouvoir détecter la nécessité d'un changement d'affichage correspondant à la nécessité d'un changement de mode d'affichage et à la nécessité d'un changement d'échelle ; et
b2) si la nécessité d'un changement d'affichage est détectée à l'étape b1) :
α) on détermine une nouvelle configuration d'affichage qui est adaptée à l'environnement courant de l'aéronef et qui permet de présenter sur l'écran de navigation (2) l'événement détecté à l'étape a), une configuration d'affichage représentant un mode d'affichage et une échelle ; et
β) on réalise automatiquement un changement d'affichage de l'écran de navigation (2), en lui appliquant la nouvelle configuration d'affichage déterminée à l'étape α),
procédé selon lequel, de plus, un pilote de l'aéronef peut demander un changement d'affichage de l'écran de navigation (2) afin d'obtenir une nouvelle configuration d'affichage et, lorsque deux changements différents sont demandés simultanément respectivement par le pilote et par l'opération α), on sélectionne automatiquement, conformément à une logique de priorité prédéterminée, l'une des deux nouvelles configurations d'affichage demandées, et on applique automatiquement à l'écran de navigation (2) la nouvelle configuration d'affichage ainsi sélectionnée,
procédé selon lequel dans le cas d'une alerte de collision émise à l'étape a), relative à un aéronef intrus :
- on vérifie, en tenant compte de la position angulaire de l'aéronef intrus par rapport au cap magnétique dudit aéronef, si cet aéronef intrus est contenu dans l'image qui est affichée sur l'écran de navigation (2) et qui est conforme au mode d'affichage courant, et si cela n'est pas le cas, on détermine un mode d'affichage, pour lequel la position angulaire de l'aéronef intrus peut être affichée sur l'écran de navigation (2) ; et
- on vérifie, en tenant compte de l'échelle courante de l'écran de navigation (2), et de la distance entre ledit aéronef et l'aéronef intrus, si l'aéronef intrus se trouve sur l'image affichée par l'écran de navigation (2), et si cela n'est pas le cas, on sélectionne une échelle permettant de représenter cet aéronef intrus sur l'image affichée.

2. Procédé selon la revendication 1,
**caractérisé en ce que**, en cas de détection d'un événement dangereux à l'étape a), on réalise de plus les opérations suivantes :
- on analyse l'ensemble des informations présentées sur l'écran de navigation (2) de manière à déterminer les informations qui ne sont pas indispensables à court terme pour le pilotage de l'aéronef ; et
- on désactive sur ledit écran de navigation (2) l'affichage de toutes les informations non indispensables ainsi déterminées.

3. Procédé selon l'une des revendications 1 et 2,
**caractérisé en ce qu'**à l'étape a), on réalise une surveillance d'au moins l'un des éléments suivants :
- le trafic aérien qui existe dans l'environnement aérien de l'aéronef ;
- le terrain survolé par l'aéronef ; et
- l'environnement aérodynamique de l'aéronef.

4. Procédé selon l'une quelconque des revendications 1 à 3, **caractérisé en ce que** ladite logique de priorité est fonction de la configuration d'affichage demandée et de la phase de vol de l'aéronef.

5. Procédé selon l'une quelconque des revendications 1 à 3, **caractérisé en ce que**, lors d'une alerte de collision, ladite sélection de l'échelle est réalisée de façon itérative, en faisant la vérification pas à pas suivant les valeurs d'échelle possibles qui sont prises en compte successivement selon un ordre de valeur croissante.

6. Dispositif d'ajustement automatique d'une image d'un écran de navigation (2) d'un aéronef, ledit écran de navigation (2) étant susceptible d'afficher une image selon l'un d'une pluralité de modes d'affichage différents et avec l'une d'une pluralité d'échelles différentes, ledit dispositif (1) comportant :
- des moyens de surveillance (3) pour effectuer une surveillance automatique de l'environnement de l'aéronef de manière à pouvoir détecter un événement susceptible d'être dangereux pour l'aéronef ;
- des premiers moyens (4, 5) pour analyser automatiquement l'affichage mis en oeuvre sur l'écran de navigation (2), si un tel événement est détecté par les moyens de surveillance (3), de manière à pouvoir détecter la nécessité d'un changement d'affichage, lesdits premiers moyens (4, 5) comprenant des moyens (4) pour détecter la nécessité d'un changement de mode d'affichage et des moyens (5) pour détecter la nécessité d'un changement d'échelle ;
- des deuxièmes moyens (8, 9) pour déterminer automatiquement, si la nécessité d'un changement d'affichage est détectée par les premiers moyens (4, 5), une nouvelle configuration d'affichage qui est adaptée à l'environnement courant de l'aéronef et qui permet de présenter sur l'écran de navigation (2) l'événement détecté, une configuration d'affichage représentant un mode d'affichage et une échelle ;
- des moyens d'affichage (12) pour réaliser automatiquement un changement d'affichage de l'écran de navigation (2), en appliquant la nouvelle configuration d'affichage déterminée par lesdits deuxièmes moyens (8, 9) ;
- des moyens de commande (21) actionnables, permettant à un pilote de l'aéronef de demander un changement d'affichage de l'écran de navigation (2) ; et
- des moyens auxiliaires (22) pour, lorsque deux changements différents sont demandés simultanément respectivement par le pilote et par lesdits deuxièmes moyens (8, 9), sélectionner l'une des nouvelles configurations d'affichage demandées, conformément à une logique de priorité prédéterminée, la nouvelle configuration d'affichage sélectionnée par lesdits moyens auxiliaires (22) étant appliquée automatiquement à l'écran de navigation (2),
lesdits premiers et deuxième moyens (4, 5, 8, 9) étant intégrés dans une première et une seconde unités de traitement (24, 25),
ladite première unité de traitement (24) étant telle qu'elle vérifie, en tenant compte de la position angulaire d'un aéronef intrus détecté par rapport au cap magnétique de l'aéronef sur lequel est monté ledit dispositif (1), si cet aéronef intrus est contenu dans l'image qui est affichée sur l'écran de navigation (2) et qui est conforme au mode d'affichage courant, et si cela n'est pas le cas, elle détermine un mode d'affichage, pour lequel la position angulaire de l'aéronef intrus peut être affichée sur l'écran de navigation (2),
et ladite seconde unité de traitement (25) étant telle qu'elle vérifie, en tenant compte de l'échelle courante de l'écran de navigation (2), et de la distance entre l'aéronef équipé du dispositif (1) et l'aéronef intrus, si l'aéronef intrus se trouve sur l'image affichée par l'écran de navigation (2), et si cela n'est pas le cas, elle sélectionne une échelle permettant de représenter cet aéronef intrus sur l'image affichée.

7. Dispositif selon la revendication 6,
**caractérisé en ce qu'**il comporte de plus :
- des troisièmes moyens (18) pour analyser l'ensemble des informations présentées sur l'écran de navigation (2), si un événement dangereux est détecté par les moyens de surveillance (3), de manière à déterminer les informations qui ne sont pas indispensables à court terme pour le pilotage de l'aéronef ; et
- des quatrièmes moyens (19) pour désactiver sur ledit écran de navigation (2) l'affichage de toutes les informations non indispensables telles que déterminées par lesdits troisièmes moyens (18).

8. Aéronef,
**caractérisé en ce qu'**il comporte un dispositif (1) tel que celui spécifié sous l'une des revendications 6 et 7.

## Patentansprüche

1. Verfahren zur automatischen Anpassung eines Bildes eines Navigationsbildschirms (2) eines Flugzeugs, wobei der Navigationsbildschirm (2) eingerichtet ist, gemäß einem von mehreren verschiedenen Anzeigemoden und gemäß einem von mehreren verschiedenen Maßstäben ein Bild anzuzeigen, wobei gemäß dem Verfahren auf automatische Weise die folgenden aufeinanderfolgenden Operationen ausgeführt werden:
a) automatisches Ausführen einer Überwachung der Umgebung des Flugzeugs, um ein Ereignis erfassen zu können , das für das Flugzeug gefährlich sein kann; und
b) wenn ein solches Ereignis in Schritt a) erfasst wird:
b1) Analysieren der Anzeige, die auf dem Navigationsbildschirm (2) umgesetzt wird, um die Notwendigkeit für eine Änderung der Anzeige zu erfassen, die einer Notwendigkeit einer Änderung des Anzeigemodus und einer Notwendigkeit der Änderung des Maßstabs entspricht; und
b2) wenn die Notwendigkeit für eine Änderung der Anzeige im Schritt b1) erfasst wird:
α) eine neue Konfiguration der Anzeige bestimmt wird, die an die aktuelle Umgebung des Flugzeugs angepasst ist und die es ermöglicht, auf dem Navigationsbildschirm (2) das Ereignis, das in Schritt a) erfasst wurde, darzustellen, wobei eine Konfiguration der Anzeige einen Anzeigemodus und einen Maßstab darstellt;
β) automatisch eine Änderung der Anzeige des Navigationsbildschirms (2) umgesetzt wird, in dem auf ihn die neue Konfiguration der Anzeige, die im Schritt α) bestimmt wurde, angewendet wird,
wobei gemäß dem Verfahren ferner ein Pilot des Flugzeugs eine Änderung der Anzeige des Navigationsbildschirms (2) anfordern kann, um eine neue Konfiguration der Anzeige zu erhalten, und während zwei verschiedene Änderungen jeweils gleichzeitig von dem Piloten und der Operation α) angefordert werden, automatisch gemäß einer vorbestimmten Prioritätslogik eine der zwei neuen angeforderten Konfigurationen der Anzeige ausgewählt wird, und automatisch auf den Navigationsbildschirm (2) die neue, so ausgewählte Konfiguration der Anzeige angewendet wird,
wobei gemäß dem Verfahren im Fall eines Kollisionsalarms, das im Schritt a) ausgesendet wird, mit Bezug auf ein eindringendes Flugzeug:
- unter Berücksichtigung der Winkelposition des eindringenden Flugzeugs mit Bezug auf die magnetische Spitze des Flugzeugs überprüft wird, ob das eindringende Flugzeug in dem Bild enthalten ist, das auf dem Navigationsbildschirm (2) angezeigt wird und das gemäß dem aktuellen Anzeigemodus ist, und wenn das nicht der Fall ist, ein Anzeigemodus bestimmt wird, für den die Winkelposition des eindringenden Flugzeugs auf dem Navigationsbildschirm (2) angezeigt werden kann; und
- unter Berücksichtigung des gegenwärtigen Maßstabs des Navigationsbildschirms (2) und des Abstands zwischen dem Flugzeug und dem eindringenden Flugzeug überprüft wird, ob das eindringende Flugzeug sich auf dem Bild befindet, das von dem Navigationsbildschirm (2) angezeigt wird, und wenn das nicht der Fall ist, ein Maßstab ausgewählt wird, der es ermöglicht, dieses eindringende Flugzeug auf dem angezeigten Bild darzustellen.

2. Verfahren nach Anspruch 1, **dadurch gekennzeichnet, dass** im Fall der Erfassung eines gefährlichen Ereignisses in Schritt a), ferner die folgenden Operationen durchgeführt werden:
- es wird die Gesamtheit der Informationen analysiert, die auf dem Navigationsbildschirm (2) dargestellt sind, um die Informationen zu bestimmen, die kurzfristig unnötig für die Steuerung des Flugzeugs sind; und
- auf dem Navigationsbildschirm (2) wird die Anzeige aller unnötigen, so bestimmten Informationen deaktiviert.

3. Verfahren nach einem der Ansprüche 1 und 2, **dadurch gekennzeichnet, dass** im Schritt a) eine Überwachung von wenigstens einem der folgenden Elemente durchgeführt wird:
- der Flugverkehr, der in der Flugumgebung des Flugzeugs existiert;
- das Gelände, das von dem Flugzeug überflogen wird; und
- die aerodynamische Umgebung des Flugzeugs.

4. Verfahren nach einem der Ansprüche 1 bis 3, **dadurch gekennzeichnet, dass** die Prioritätslogik eine Funktion der Konfiguration der angeforderten Anzeige und der Flugphase des Flugzeugs ist.

5. Verfahren nach einem der Ansprüche 1 bis 3, **dadurch gekennzeichnet, dass** während eines Kollisionsalarms die Auswahl des Maßstabs auf iterative Weise durchgeführt wird, indem die Überprüfung schrittweise gemäß den möglichen Werten des Maßstabs durchgeführt wird, die nacheinander gemäß einer Reihenfolge der ansteigenden Werte berücksichtigt werden.

6. Vorrichtung zur automatischen Anpassung eines Bildes eines Navigationsbildschirms (2) eines Flugzeugs, wobei der Navigationsbildschirm (2) eingerichtet ist, gemäß einem von mehreren verschiedenen Anzeigemoden und gemäß einem von mehreren verschiedenen Maßstäben ein Bild anzuzeigen, wobei die Vorrichtung (1) umfasst:
- Mittel zur Überwachung (3), um eine Überwachung der Umgebung des Flugzeugs auszuführen, um ein Ereignis erfassen zu können, das für das Flugzeug gefährlich sein kann;
- erste Mittel (4, 5), um automatisch die Anzeige die auf dem Navigationsbildschirm (2) umgesetzt wird, zu analysieren, wenn ein solches Ereignis von den Mitteln zur Überwachung (3) erfasst wird, um die Notwendigkeit für eine Änderung der Anzeige erfassen zu können, wobei die ersten Mittel (4, 5) Mittel (4), um eine Notwendigkeit einer Änderung des Anzeigemodus zu erfassen, und Mittel (5) umfassen, um eine Notwendigkeit der Änderung des Maßstabs zu erfassen;
- zweite Mittel (8, 9), um automatisch, wenn die Notwendigkeit für eine Änderung der Anzeige durch die ersten Mittel (4, 5) erfasst wird, eine neue Konfiguration der Anzeige zu bestimmen, die an die aktuelle Umgebung des Flugzeugs angepasst ist und die es ermöglicht, auf dem Navigationsbildschirm (2) das erfasste Ereignis darzustellen, wobei eine Konfiguration der Anzeige einen Anzeigemodus und einen Maßstab darstellt;
- Mittel zur Anzeige (12), um automatisch eine Änderung der Anzeige des Navigationsbildschirms (2) umzusetzen, in dem die neue Konfiguration der Anzeige, die durch die zweiten Mittel (8, 9) bestimmt wurde, angewendet wird;
- betätigbare Mittel zur Steuerung (21), die es einem Pilot des Flugzeugs ermöglichen, eine Änderung der Anzeige des Navigationsbildschirms (2) anzufordern; und
- zusätzliche Mittel (22), um, während zwei verschiedene Änderungen jeweils gleichzeitig von dem Piloten und den zweiten Mitteln (8, 9) angefordert werden, automatisch gemäß einer vorbestimmten Prioritätslogik eine der neuen angeforderten Konfigurationen der Anzeige auszuwählen, wobei die neue Konfiguration, die von den zusätzlichen Mitteln (22) ausgewählt wird, automatisch auf den Navigationsbildschirm (2) angewendet wird,
wobei die ersten und zweiten Mittel (4, 5, 8, 9) in einer ersten und einer zweiten Einheit zur Verarbeitung (24, 25) integriert sind,
wobei die erste Einheit zur Verarbeitung (24) derart ist, dass sie unter Berücksichtigung der Winkelposition des erfassten eindringenden Flugzeugs mit Bezug auf die magnetische Spitze des Flugzeug überprüft, an der die Vorrichtung (1) angebracht ist, ob das eindringende Flugzeug in dem Bild enthalten ist, das auf dem Navigationsbildschirm (2) angezeigt wird und das gemäß dem aktuellen Anzeigemodus ist, und wenn das nicht der Fall ist, einen Anzeigemodus bestimmt, für den die Winkelposition des eindringenden Flugzeugs auf dem Navigationsbildschirm (2) angezeigt werden kann; und
und wobei die zweite Einheit zur Verarbeitung (25) derart ist, dass sie unter Berücksichtigung des gegenwärtigen Maßstabs des Navigationsbildschirms (2) und des Abstands zwischen dem Flugzeug, das mit der Vorrichtung (1) ausgestattet ist, und dem eindringenden Flugzeug überprüft, ob das eindringende Flugzeug sich auf dem Bild befindet, das von dem Navigationsbildschirm (2) angezeigt wird, und wenn das nicht der Fall ist, einen Maßstab auswählt, der es ermöglicht, dieses eindringende Flugzeug auf dem angezeigten Bild darzustellen.

7. Vorrichtung nach Anspruch 6, **dadurch gekennzeichnet, dass** sie ferner umfasst:
- dritte Mittel (18), um eine Gesamtheit der Informationen zu analysieren, die auf dem Navigationsbildschirm (2) dargestellt sind, wenn ein gefährliches Ereignis von den Überwachungsmitteln (3) erfasst wird, um die Informationen zu bestimmen, die kurzfristig unnötig für die Steuerung des Flugzeugs sind; und
- vierte Mittel (19), um auf dem Navigationsbildschirm (2) die Anzeige aller unnötigen Informationen zu deaktivieren, wie sie von den dritten Mittel (18) bestimmt wurden.

8. Flugzeug, **dadurch gekennzeichnet, dass** es eine Vorrichtung (1) umfasst, wie sie in einem der Ansprüche 6 und 7 angegeben ist.

## Claims

1. A method for automatically adjusting an image of a navigation screen (2) of an aircraft, said navigation screen (2) being capable of displaying an image according to one of a plurality of different display modes and with one of a plurality of different scales, according to which method, the following steps are carried out, in an automatic manner:
a) a monitoring of the environment of the aircraft is performed automatically so as to be able to detect an event liable to be dangerous for the aircraft; and
b) if such an event is detected in step a):
b1) the display implemented on the navigation screen (2) is analyzed so as to be able to detect the necessity for a change of display corresponding:
• to a change of display mode; and/or
• to a change of scale;
b2) if the necessity for a change of display is detected in step b1):
α) a new display configuration is determined, namely a new display mode and/or a new scale, which is suited to the current environment of the aircraft and which makes it possible to present on the navigation screen (2) the event detected in step a), a display configuration representing a display mode and a scale; and
β) a change of display of the navigation screen (2) is carried out automatically by applying thereto the new display configuration determined in step α), according to which method, moreover, a pilot of the aircraft can request a change of display of the navigation screen (2) so as to obtain a new display configuration and, when two different changes are requested simultaneously respectively by the pilot and by the operation α), one of the two new display configurations requested is selected automatically in accordance with a predetermined priority logic, and the new display configuration thus selected is applied automatically to the navigation screen (2),
according to which method, in the case of a collision alert emitted at step a), relating to an intruder aircraft:
- one cheks, by taking account of the angular position of the intruder aircraft detected with respect to the magnetic heading of the aircraft whether this intruder aircraft is contained in the image which is displayed on the navigation screen (2) and which complies with the current display mode. If such is not the case, one determines a display mode, for which the angular position of the intruder aircraft can be displayed on the navigation screen (2); and
- one checks, by taking account of the current scale of the navigation screen (2) and of the distance between the aircraft and the intruder aircraft, whether the intruder aircraft is situated on the image displayed by the navigation screen (2). If such is not the case, one selects a scale making it possible to represent this intruder aircraft on the image displayed.

2. The method as claimed in claim 1, **characterized in that**, should a dangerous event be detected in step a), the following operations are carried out moreover:
- the set of information presented on the navigation screen (2) is analyzed so as to determine the information which is not indispensable in the short term for the piloting of the aircraft; and
- the display of all the non-indispensable information thus determined is deactivated on said navigation screen (2).

3. The method as claimed in one of claims 1 and 2, **characterized in that** in step a), a monitoring of at least one of the following elements is carried out:
- the air traffic which exists in the aerial environment of the aircraft;
- the terrain overflown by the aircraft; and
- the aerodynamic environment of the aircraft.

4. The method as claimed in one of claims 1 to 3, **Characterized in that** said priority logics are a function of the display configurations requested and/or as a function of the flight phase.

5. The method as claimed in claims 1 to 3, **Characterized in that**, in the vase of a collision alert, said scale selection is carried out in an iterative manner, by making the aforesaid check stepwise in accordance with the possible scale values which are taken into account successively according to an order of increasing value.

6. A device for automatically adjusting an image of a navigation screen (2) of an aircraft, said navigation screen (2) being capable of displaying an image according to one of a plurality of different display modes and with one of a plurality of different scales, said device comprising:
- monitoring means (3) for performing an automatic monitoring of the environment of the aircraft so as to be able to detect an event liable to be dangerous for the aircraft;
- first means (4, 5) for automatically analyzing the display implemented on the navigation screen (2), if such an event is detected by the monitoring means (3), so as to be able to detect the necessity for a change of display corresponding:
• to a change of display mode; and/or
• to a change of scale;
- second means (8, 9) for automatically determining, if the necessity for a change of display is detected by the first means (4, 5), a new display configuration, namely a new display mode and/or a new scale, which is suited to the current environment of the aircraft and which makes it possible to present on the navigation screen (2) the detected event;
- display means (12) for automatically carrying out a change of display of the navigation screen (2), by applying the new display configuration determined by said second means (8, 9);
- actuatable control means (21), allowing a pilot of the aircraft to request a change of display of the navigation screen (2); and
- auxiliary means (22) for, when two different changes are requested simultaneously respectively by the pilot and by said second means (8, 9), selecting one of the new display configurations requested, in accordance with a predetermined priority logic, the new display configuration selected by said auxiliary means (22) being applied automatically to the navigation screen (2) ;
said first and second means (4, 5, 8, 9,) being integrated in a first and a second processing units (24, 25),
said first processing unit (24) being such that it checks, by taking account of the angular position of the intruder aircraft detected with respect to the magnetic heading of the aircraft whether this intruder aircraft is contained in the image which is displayed on the navigation screen (2) and which complies with the current display mode. If such is not the case, one determines a display mode, for which the angular position of the intruder aircraft can be displayed on the navigation screen (2), and
said second processing unit (25) being such that it checks, by taking account of the current scale of the navigation screen (2) and of the distance between the aircraft and the intruder aircraft, whether the intruder aircraft is situated on the image displayed by the navigation screen (2). If such is not the case, one selects a scale making it possible to represent this intruder aircraft on the image displayed.

7. The device as claimed in claim 6,
**characterized in that** it comprises moreover:
- third means (18) for analyzing the set of information presented on the navigation screen (2), if a dangerous event is detected by the monitoring means (3), so as to determine the information which is not indispensable in the short term for the piloting of the aircraft; and
- fourth means (19) for deactivating on said navigation screen (2) the display of all the non-indispensable information such as determined by said third means (18).

8. An aircraft,
**characterized in that** it comprises a device (1) such as that specified under any one of claims 6 and 7.
